# DEMANDE DE BREVET EUROPEEN

(11) **EP 3 168 353 A1**
(43) Date de publication de la demande: **17.05.2017**
(21) Numéro de dépôt: 16197912.5
(22) Date de dépôt: 09.11.2016
(51) Int. Cl.: D04H 1/559, B29C 70/52, B29C 70/08, B29C 70/20, D04H 3/04, D04H 3/12, D04H 3/14

(54) **NON TISSE**

(30) Priorité: 12.11.2015 FR 1560839
(71) Demandeur: Epsilon Composite, 33340 Gaillan en Medoc (FR)
(72) Inventeur: PORTOLES, José, 33340 QUEYRAC (FR)
(74) Mandataire: Novagraaf Technologies

(57) **Abrégé**

La présente invention se rapporte à un non tissé constitué de nappes (1, 2, 3, 4) de fibres (10, 20, 30, 40) superposées, il est caractérisé en ce qu'un voile (6) de liant est disposé entre deux nappes et thermo-soudé et qu'il est non cousu. Le thermo-soudage des nappes rend le non tissé extrêmement solide et vient figer l'orientation des fibres (10, 20, 30, 40), qui ne peuvent plus bouger lors de la mise en oeuvre du non tissé. Les fibres sont, en effet, tenues par des points de soudures non continus et répartis sur toute la surface à la différence d'une couture.

## Description

La présente invention se rapporte à un non tissé composé de plusieurs nappes de fibres superposées.

La tenue de ces différentes nappes entre elles peut poser problème notamment si le non tissé est utilisé pour réaliser des profilés pultrudés.

Ce problème est encore plus critique lorsque les nappes de fibres sont constituées de fibres d'orientation différentes, en effet si quand le procédé de pultrusion est utilisé pour la réalisation de profilés avec des fibres unidirectionnelles dans le sens de la longueur du profilé, l'orientation des fibres ne risque pas d'être modifiée, quand les fibres ont une orientation différente du sens de l'opération de pultrusion elles ont tendance à se déplacer de façon incontrôlée.

En particulier, si on cherche à renforcer les profilés dans les autres directions comme par exemple à 45° et/ou à 90°, on utilise des renforts multiaxiaux proposés dans le commerce qui sont réalisés soit par tissage, soit par dépose de nappes cousues ensembles pour former des non tissés multiaxiaux, dans ce cas, la solidité (cohésion et respect des angles durant la mise en oeuvre) du non tissé dépend de la couture. Ces renforts multiaxiaux présentent l'inconvénient d'être fragiles lors de leur mise en oeuvre et particulièrement pour la mise en oeuvre par pultrusion où il faut tirer sur les renforts multiaxiaux et les faire passer dans une filière. En particulier, ces renforts multiaxiaux se déforment et quand les angles font initialement 45° et 90°, ces angles ne sont plus respectés après la mise en oeuvre. Les caractéristiques mécaniques de ces profilés sont alors grandement diminuées. D'autre part, quand il n'y a pas de fibres dans le sens de la longueur (0°) dans le non tissé la résistance en traction diminue fortement et est très faible dans le cas où il n'y a que des fibres orientées de + et - 45°. Ceci peut être particulièrement critique pour certaines applications comme l'aéronautique.

Les fils sont liés au point de couture mais peuvent bouger facilement entre les points de couture (espacés par exemple de 5 à 10mm), car il y a peu de points de liaison entre les fibres. En plus, les coutures provoquent une déformation de la nappe de fibre pour laisse passer l'aiguille, créant ainsi un trou qui peut être gênant d'une part si on cherche une certaine protection de surface pour les performance électriques éventuelles et/ou l'homogénéité de surface, d'autre part qui peut désaligner les fibres entraînant des pertes des caractéristiques mécaniques.

Il est possible de relier des nappes de fils transversaux par soudure grâce à une grille, ces fils étant liés entre eux par des fils de liages pour permettre de maintenir parallèle uns aux autres les fils d'une nappe, cependant les points de soudure vont alors être répartis de selon la grille, c'est-à-dire espacés selon une distance prédéterminée, la tenue des fils sera insuffisante.

Pour réaliser des pièces préformées, il est connu d'utiliser un tissu multiaxial comprenant des couches de renforcement de fibres unidirectionnelles avec des couches intermédiaires non tissées comprenant un tissu filé-lié, filé-lacé, ou maillé de fibres thermoplastiques disposées entre les couches de renforcement. Ce procédé ne permet pas de garantir le maintien de la direction des fibres lors des opérations de préformage ou de formage.

Il est également possible de préimprégner les fibres de renforcement pour leur conférer une capacité à mieux maintenir leur alignement que les mêmes fibres non imprégnées entraînant une augmentation significative des coûts de fabrication et de la complexité de la mise en oeuvre (condition de transport et de stockage, température de stockage et d'utilisation).

Les fibres peuvent aussi être recouvertes de poudre thermoplastique ou thermodurcissable pour lier les fils par points. Cependant, l'utilisation de poudre nécessite de calibrer la quantité de produit à utiliser et d'éliminer le surplus.

L'invention se propose de réaliser des non tissés qui suppriment ces inconvénients, un procédé de réalisation de ce type de non tissé ainsi que le profilé obtenu avec ce non tissé.

Le non tissé selon l'invention est constitué de nappes de fibres superposées, il est caractérisé en ce qu'un voile de liant est disposé entre deux nappes et thermo-soudé et qu'il est non cousu. Le thermo-soudage des nappes rend le non tissé extrêmement solide et vient figer l'orientation des fibres qui ne peuvent plus bouger lors de la mise en oeuvre du non tissé. Les fibres sont, en effet, tenues par des points de soudures non continus et répartis sur toute la surface à la différence d'une couture. Le fait que le non tissé ne soit pas cousu permet de garantir une orientation constante des fibres sans aucune discontinuité.

Avantageusement, le non tissé est un non tissé de pultrusion. Ce non tissé est particulièrement adapté à la pultrusion car il n'est pas troué par une couture et présente une répartition dense de points de soudure des fibres qui sont ainsi particulièrement bien immobilisées.

Avantageusement, les nappes sont constituées de fibres orientées. Le thermo-soudage permet d'avoir plus de points de liaison entre les fibres et donc de garantir une meilleure tenue de celles-ci en particulier quand celles-ci sont orientées.

Avantageusement, deux nappes superposées ont des orientations différentes de fibres. Les profilés ont une meilleure tenue si on utilise des non tissés avec des fibres d'orientations opposées.

Avantageusement, le voile de liant est un thermoplastique. L'avantage apporté par ces voiles thermoplastique est d'améliorer la tenue aux chocs du composite obtenu.

Selon une disposition particulière, le non tissé comprend un voile de surface. Le thermo-soudage d'un voile de surface (qui peut être un mat de verre ou un voile polymère) permet d'assurer des fonctions de protection (contre la corrosion galvanique, contre l'abrasion ...) lors de la réalisation de profilés en carbone. En général, pour une meilleure protection, voire une meilleure isolation, le voile de surface ne doit pas être percé et ne peut donc pas être cousu.

Avantageusement, le voile de liant à une température de fusion supérieure à une température de pultrusion. Le voile de liant qui peut être un thermoplastique, sera choisi pour avoir une température de fusion supérieure à la température utilisée lors du procédé de pultrusion de façon à éviter la dégradation du non tissé lors de l'opération de pultrusion.

Avantageusement, le voile de liant a un grammage inférieur ou égal au grammage des fibres des nappes. Le non tissé doit rester perméable pour permettre la pultrusion. Le grammage des voiles de liant ou des thermoplastiques doit être suffisamment bas pour permettre une bonne imprégnation des fibres mais suffisamment haut pour éviter tout mouvement des fibres après thermo-soudage. Le grammage du voile de liant ou du thermoplastique dépend du grammage des fibres, il doit être inférieur à 10% du grammage des fibres, de préférence inférieur à 5%. Par exemple, un grammage entre 4 et 8 g/m² permet de thermo souder des nappes de 100 à 300g/m² de carbone.

Avantageusement, certains fils sont des fibres de renforcement. Ces fibres peuvent être en carbone, en fibres de verre, en aramide (kevlar™)...

L'invention concerne aussi un procédé de réalisation d'un non tissé consistant à superposer des nappes de fibres et au moins un voile de liant entre deux nappes de fibres, puis à thermo-souder l'ensemble.

Avantageusement, un voile de surface est disposé sur les nappes de fibres avant le thermo-soudage. Ce voile de surface doit être compté dans les couches à prendre en compte lors de l'opération de thermo-soudage. Toutes les couches de fibre de renfort sont thermo-soudées en une seule fois. Cependant il est possible de répéter cette opération plusieurs fois afin d'atteindre l'empilement de nappes voulu, par exemple un voile de renfort peut ainsi être thermo-soudé sur un renfort multiaxial déjà existant.

L'invention porte également sur un profilé pultrudé comprenant un non tissé avec au moins une des caractéristiques précédentes. Le pultrudé utilise un non tissé obtenu selon le procédé. Le profilé ainsi obtenu est particulièrement adapté aux utilisations aéronautiques qui sont particulièrement exigeantes.

D'autres avantages pourront encore apparaître à l'homme du métier à la lecture des exemples ci-dessous, illustrés par les figures annexées, donnés à titre d'exemple:
- La figure 1 est un non tissé cousu de l'état de la technique,
- La figure 2 est une vue schématique d'un non tissé selon l'invention,
- La figure 3 est une vue de dessus d'un non tissé selon l'invention.

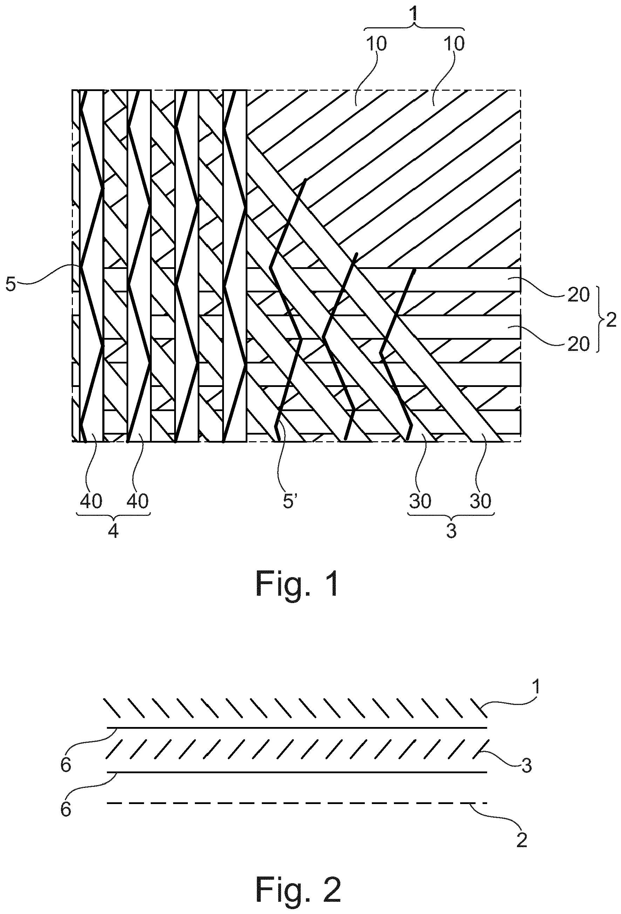

Le non tissé de l'état de la technique illustré figure 1 est ici constitué de quatre nappes 1, 2, 3 et 4 de fibres 10, 20, 30 et 40 superposées et cousues entre elles par une couture 5. Les fibres d'une même nappe sont parallèles entre elles. Ici, les nappes sont orientées différemment sur chacune des couches.

On considèrera que les fibres verticales sur la figure 1 sont dans le sens de la traction, c'est-à-dire qu'elles font un angle de 0°. Les fibres 20 de la nappe 2 font donc un angle de 90°. Les fibres 20 de la deuxième nappe 2 sont disposées sur les fibres 10 de la première nappe 1 orientées avec un angle de 45°. La troisième nappe 3 est disposée sur la deuxième nappe 2 et ses fibres 30 sont disposées avec un angle de - 45°par rapport aux fibres 40. La quatrième nappe 4 a des fibres 40 disposées à 0°soit suivant la longueur du non tissé.

La couture 5 crée des points de liaison entre les nappes de façon linéaire et espacée. La couture 5' est plus sinueuse. Les fibres sont liées au point de couture mais peuvent bouger facilement entre les points de couture qui sont en général espacés de 5 à 10mm.

Dans cette figure le non tissé est quadri axial (avec des angles de 45°, 90°, -45° et 0°) et sa solidité dépend de la couture. Mais quand il n'y a pas de 0° dans le non tissé la résistance en traction diminue fortement et est très faible dans le cas où il n'y a que du + et - 45°.

Sur la figure 2, il y a trois nappes 1, 2, 3 orientées: la nappe 2 est constituée de fibres 20 d'angle 0°, tandis que les nappes 1 et 3 sont constituées de fibres 10 et 30 d'angles + ou -45°. Chaque nappe est séparée de la suivante par un voile de liant 6.

Par exemple pour fixer un non tissé de quatre nappes un seul voile de liant entre deux nappes est suffisant, et pour fixer les autres nappes il faut soit intercaler des voiles de liant soit rajouter une couture comme dans l'état de l'art.

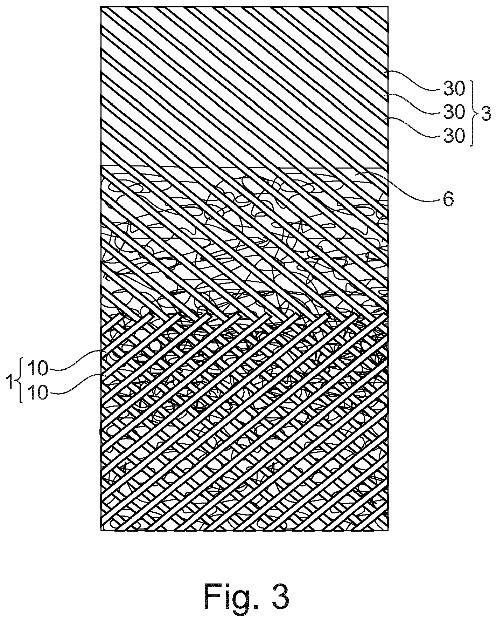

Le non tissé illustré figure 3 est constitué de deux nappes 1 et 3 orientées à + ou - 45°, et un voile 6 de liant intercalé. Comme on peut le voir sur la figure, ce voile 6 qui va être thermo-soudé, couvre une partie importante de chaque nappe 1 et 3, il y aura donc un nombre important de point de collage des fibres de chaque nappe rendant les différentes couches solidaires.

Le voile 6 sera de préférence très fin pour permettre de réaliser une multitude de micro collages empêchant les fibres 10 et 30 de bouger.

Dans cet exemple, le non tissé a uniquement deux couches (2 nappes) mais on peut rajouter d'autres couches en intercalant (ou non) d'autres voiles de liant 6.

Le principe reste le même si on remplace la dernière couche par une voile de surface.

## Revendications

1. Non tissé constitué d'au moins deux nappes (1, 2, 3, 4) de fibres (10, 20, 30, 40) superposées **caractérisé en ce qu'**un voile (6) de liant est disposé entre deux nappes (1, 2, 3, 4) et thermo-soudé et qu'il est non cousu.

2. Non tissé selon la revendication 1 **caractérisé en ce qu'**il est un non tissé de pultrusion.

3. Non tissé selon la revendication 1 ou 2 **caractérisé en ce que** les nappes (1, 2, 3, 4) sont constituées de fibres (10, 20, 30, 40) orientées.

4. Non tissé selon la revendication précédente, **caractérisé en ce que** deux nappes superposées ont des orientations différentes de fibres.

5. Non tissé selon une des revendications précédentes **caractérisé en ce que** le voile (6) de liant est un thermoplastique.

6. Non tissé selon une des revendications précédentes, **caractérisé en ce qu'**il comprend un voile de surface.

7. Non tissé selon une des revendications 2 à 6, **caractérisé en ce que** le voile de liant à une température de fusion supérieure à une température de pultrusion.

8. Non tissé selon une des revendications 3 à 7, **caractérisé en ce que** le voile (6) de liant a un grammage inférieur ou égal au grammage des fibres (10, 20, 30, 40) des nappes.

9. Non tissé selon une des revendications 3 à 8, **caractérisé en ce que** certaines fibres sont des fibres de renforcement.

10. Non tissé selon une des revendications précédentes **caractérisé en ce que** les nappes sont constituées en fibres de carbone.

11. Procédé de réalisation d'un non tissé **caractérisé en ce qu'**il consiste à superposer des nappes (1, 2, 3, 4) de fibres et au moins un voile (6) de liant entre deux nappes de fibres, puis à thermo-souder l'ensemble.

12. Procédé selon la revendication précédente, **caractérisé en ce qu'**un voile de surface est disposé sur les nappes de fibres avant le thermo-soudage.

13. Profilé pultrudé comprenant un non tissé selon une des revendications 1 à 9.
